# EUROPÄISCHE PATENTANMELDUNG

(11) **EP 4 105 536 A1**
(43) Veröffentlichungstag der Anmeldung: **21.12.2022**
(21) Anmeldenummer: 21179838.4
(22) Anmeldetag: 16.06.2021
(51) Int. Cl.: F16L 55/179, F16L 55/163

(54) **ROHREINSATZMANSCHETTE ZUR REPARATUR VON ROHRABZWEIGEN EINER ROHRLEITUNG, VERFAHREN ZUR SANIERUNG VON ROHRABZWEIGEN EINER ROHRLEITUNG SOWIE VERWENDUNG EINER ERFINDUNGSGEMÄSSEN ROHREINSATZMANSCHETTE ZUR SANIERUNG EINER ROHRLEITUNG MIT EINEM ROHRABZWEIG**

(71) Anmelder: Wirth Fulda GmbH, 36043 Fulda (DE)
(72) Erfinder: Blackwell, Patrick, 73249 Wernau (DE); Wiessler, Marco, 89542 Herbrechtingen (DE)
(74) Vertreter: dompatent von Kreisler Selting Werner - Partnerschaft von Patent- und Rechtsanwälten mbB

(57) **Zusammenfassung**

Rohreinsatzmanschette zur Reparatur von Rohrabzweigen einer Rohrleitung umfassend einen Stutzen und eine an ein Ende des Stutzens anschließende Krempe gebildet aus zwei auf-einander aufliegenden textilen Flächengebilden, wobei die Flächengebilde aus einer horizontal verlaufenden Krempenhalbfläche und einer daran anschließenden vertikal verlaufenden Stutzenhalbfläche gebildet ist; wobei die Flächengebilde im Bereich der Seitenkanten der Stutzenhalbfläche zur Ausbildung des Stutzens und im Bereich der dem Stutzen zugewandten Kanten der Krempenhalbfläche zur Ausbildung der Krempe miteinander verbunden sind.

## Beschreibung

Gemäß einem ersten Aspekt betrifft die vorliegende Erfindung eine Rohreinsatzmanschette zur Reparatur von Rohrabzweigen einer Rohrleitung, gemäß einem zweiten Aspekt der Erfindung ist ein Verfahren zur Sanierung von Rohrabzweigen einer Rohrleitung vorgesehen, gemäß einem dritten Aspekt kann eine Verwendung einer Rohreinsatzmanschette gemäß dem ersten Aspekt der Erfindung zur Sanierung einer Rohrleitung mit einem Rohrabzweig vorgesehen werden.

Aus dem Stand der Technik sind Rohrleitungssysteme bekannt, welche über eine Rohrleitung mit entsprechenden Abzweigen verfügt. In dem Anwendungsbereich von Abwasserrohren wird das Abwasser von einem zu entwässernden Gegenstand durch eine entsprechend dimensionierte Rohrleitung in ein Rohr mit meist einem größeren Rohrdurchmesser geleitet, wobei es sich beispielsweise um ein Hauptrohr oder um einen Sammler für das Abwasser handelt. Bei Wasser-, Lüftungs- oder Förderrohren wird das zu transportierende Medium von einer Hauptleitung in entsprechende Verteilerleitungen abgezweigt.

Allen den vorgenannten Rohrleitungssystemen ist gemein, dass die von einer Hauptrohrleitung abgehenden Rohrabzweige T-förmig in einem Winkel von etwa 85 bis 90 Grad oder alternativ Y-förmig in einem Winkelbereich von 15 bis 67 Grad angebunden werden. Dabei erfolgt die Verbindung bzw. Anbindung zwischen dem Rohrabzweig und der Rohrleitung in der Regel über ein Formstück.

Bei der Ausführung von Rohrabzweigungen bzw. Rohranbindungen an einem Hauptkanal bzw. einer Rohrleitung wurde insbesondere in den Nachkriegsjahren die vorgenommene Anbindung oft nicht fachgerecht ausgeführt. Häufig wurde mit einem Hammer ein Loch in das Hauptrohr bzw. die Hauptrohrleitung geschlagen und das Abzweigrohr in das Loch der Hauptrohrleitung gesteckt und mit einem verfügbaren Dichtmaterial, meist mit Mörtel, angebunden und abgedichtet.

Betrachtet man das heutige Kanalisationssystem, so stellen undichte Zu- und Abläufe auch aufgrund der vorgenannten Anbindungsformen eine der häufigsten Schadensursachen für undichte Rohrleitungen dar. Auch bei anderen Medientransportleitungen sind Abzweige eine der am stärksten beanspruchten Bereiche der Rohrleitungssysteme, insbesondere wenn durch die Rohrleitungen abrasive Medien transportiert werden.

Aus dem Stand der Technik ist es bereits bekannt, die Zuläufe bzw. Abzweige der Rohrleitungen mittels harzgetränkten Textilmanschetten zu sanieren. Hierbei wird im Stand der Technik eine Manschette beispielsweise aus einem textilen Material hergestellt, welches mit einem Harz getränkt wird und mittels einem Setzgerät an der schadhaften Stelle, insbesondere in dem Bereich eines undichten Rohrabzweigs, der Rohrleitung positioniert wird. Anschließend wird die eingesetzte Rohrmanschette durch Aushärten des Harzes in ein festes Formstück überführt, welches die zu sanierende Rohrleitung und die Abzweigung abdichten. Je nach Ausführung der statischen Eigenschaften der eingesetzten Manschette können die statischen Eigenschaften der ursprünglich vorliegenden Rohrleitung im Bereich der Manschette wiederhergestellt oder ggf. sogar verbessert werden.

Aus dem Stand der Technik sind grundsätzlich zwei unterschiedliche Varianten von Rohreinsatzmanschetten für die Reparatur Rohrleitungen bekannt. Unter der Bezeichnung des Hutprofils oder der Hutmanschette versteht man einen Textilschlauch mit einer daran angebrachten, meist angenähten Krempe. Die Krempe schließt dabei unmittelbar an ein Ende des Textilschlauches an und umgibt dieses ringförmig. Der Textilschlauch dient zur Auskleidung des Abzweigrohres und die Krempe dient zur Abdichtung des Bereiches der Rohrleitung um den Bereich des Rohrabzweigs herum. Die vorbezeichnete Variante der Rohreinsatzmanschette kommt überwiegend in Rohren mit größerem Durchmesser zum Einsatz, meist ab einem Innendurchmesser von DN250 (250 mm).

Bei der Installation der hutförmigen Rohreinsatzmanschette wird die Manschette mit einem Harz (Silikat, Epoxit, Polyester oder ähnliches) getränkt, darauffolgend auf einen sogenannten Hut- oder Stutzenpacker aufgesetzt bzw. fixiert. Bei dem Packer handelt es sich meist um eine fahrbare Gummiblase mit einer Ausstülpung für die Anordnung in dem Rohrabzweig. Die Hutmanschette wird mittels des Stutzenpackers in die zu reparierende bzw. sanierende Rohrleitung eingebracht und im Bereich des schadhaften Rohrabzweigs positioniert. Durch das Aufblasen der Gummiblase des Packers wird zunächst die Krempe der Rohreinsatzmanschette an die Rohrleitung angelegt, anschließend wird der Stutzen in den Rohrabzweig eingebracht. Der Packer bzw. die Gummiblase des Packers wird solange unter Druck gehalten, bis das Harz der Rohreinsatzmanschette ausgehärtet wurde. Ein derartiges Verfahren ist beispielsweise in der DE 10 2009 052 367 A1 beschrieben.

Nachteilig an dem vorbeschriebenen Stand der Technik der Huteinsatzmanschetten ist, dass diese nur durch die Verklebung des Harzes an der Innenoberfläche der Rohrwand der Rohrleitung im Bereich des Rohrabzweigs und im Bereich der Krempe im Hauptrohr in Position gehalten werden. Ist eine Verklebung der Rohreinsatzmanschette mit der Innenwandoberfläche der Rohrleitung nicht ausreichend gegeben oder wird die vorgenannte Verklebung beispielweise durch das Reinigen der Rohre gelöst, kann es vorkommen, dass die Hutmanschette aus dem Rohrabzweig in die Hauptrohrleitung zurückrutscht. Bei ausreichend großen Rohrdurchmessern wird die Rohreinsatzmanschette häufig über die in der Rohrleitung transportierten Medien weggespült. Bei kleineren Rohrdurchmessern ergibt sich jedoch die zusätzliche Problematik, dass die Rohreinsatzmanschetten sich in der Rohrleitung verkeilen können. In der Folge kann es zu einer Verstopfung der gesamten Rohrleitung kommen, welche nur mit einem größeren Aufwand beseitigt werden kann. Um das vorgenannte Problem der Verstopfung bei kleineren Rohrdurchmessern zu verhindern, wurde im Stand der Technik eine alternative zweite Variante einer Rohreinsatzmanschette entwickelt.

Die zweite marktübliche Variante der Rohreinsatzmanschette wird als T- bzw. Y-Liner oder als sogenannte Hausanschlussmanschette bezeichnet. Bei der vorgenannten Rohreinsatzmanschette gemäß dem Stand der Technik ist neben dem Bereich des Stutzens (Rohrabzweig) auch der Bereich des Hauptrohres bzw. der Rohrleitung als Schlauch ausgeführt. Der Schlauch im Bereich der Rohrleitung bildet nach der Aushärtung des Harzes ein Widerlager in der Rohrleitung gegenüber dem Rohrabzweig aus, durch welches ein Herausrutschen der Rohreinsatzmanschette aus dem Rohrabzweig verhindert wird. Bei dem T- bzw. Y-Liner ergibt sich produktionstechnisch der Nachteil, dass zwei rohrförmige textile Gewebe mit unterschiedlichem Durchmesser miteinander verbunden werden müssen, was eine komplexe Technik erfordert. Bei den vorbezeichneten Einsatzmanschetten werden die Stutzen mit einem Winkel von 45 oder 90 Grad gegenüber dem Verlauf der Hauptrohrleitung angeboten. Zudem werden die vorgenannten Hausanschlussmanschetten in sämtlichen Nennweiten des Hauptrohres angeboten, also von DN 70 bis DN 200. Die verwendete Rohreinsatzmanschette muss dabei spezifisch anhand der Nennweite des Hauptrohres ausgewählt werden. Dieses führt dazu, dass es über 80 verschiedene Varianten der zuvor bezeichneten Rohreinsatzmanschette gemäß dem Stand der Technik gibt, welche vorrätig gehalten werden müssen um bei einer Rohrsanierung die geeignete Rohreinsatzmanschette an die baulichen Anforderungen des zu sanierenden Rohrabzweigs verfügbar zu haben.

Ausgehend von den vorbezeichneten Nachteilen des Standes der Technik ist es die Aufgabe der vorliegenden Erfindung eine verbesserte Rohreinsatzmanschette bereitzustellen welche mittels eines geringeren Produktionseinsatz zu fertigen ist und gleichzeitig eine flexiblere und universelle Verwendungsmöglichkeit in unterschiedlichen, handelsüblichen Rohrleitungen bzw. Rohrabzweigen ermöglicht.

Erfindungsgemäß gelöst wird die Aufgabe durch eine Rohreinsatzmanschette zur Reparatur von Rohrabzweigen einer Rohreinleitung, welche einen Stutzen und eine an ein Ende des Stutzens anschließende Krempe, gebildet aus zwei aufeinander aufliegenden textilen Flächengebilden, umfasst. Die beiden aufeinander aufliegenden Flächengebilden sind dabei jeweils aus einer horizontal bzw. entlang des Verlaufs der Rohrlängsachse verlaufenden Krempenhalbfläche und einer daran anschließenden vertikal bzw. in Richtung des Rohrabzweigs verlaufenden Stutzenhalbfläche gebildet. Die Stutzenhalbfläche kann dabei etwa mittig an der Krempenhalbfläche anschließen.

Die Flächengebilde sind im Bereich der Seitenkanten der Stutzenhalbfläche zur Ausbildung des Stutzens und im Bereich der den Stutzen zugewandten Kanten der Krempenhalbfläche zur Ausbildung der Krempe gegenseitig miteinander verbunden. Erfindungsgemäß ist es somit vorgesehen, dass die Krempe durch zwei miteinander verbundenen Krempenhalbflächen gebildet wird, wobei die Krempenhalbflächen jeweils durch die beiden aufeinander aufliegenden textilen Flächengebilden gebildet werden. Der rohrförmige Stutzen wird dabei aus den im Bereich der Seitenkanten miteinander verbundenen Stutzenhalbflächen gebildet.

Erfindungsgemäß wird das Merkmal der Verbindung im Bereich der Seitenkante bzw. der Seitenkanten dahingehend verstanden, dass eine Verbindung unmittelbar im Bereich der Seitenkante oder in einer definierten Breite ausgehend von der Seitenkante und/oder beabstandet in einen definierten Abstand zu der Seitenkante erfolgen kann.

Bei den textilen Flächengebilden kann es sich beispielsweise um eine ununterbrochene Textillage handeln. Bevorzugt können die textilen Flächengebilden als durchgängige Materiallagen gefertigt werden. Es kann jedoch auch vorgesehen werden die Fläche der textilen Flächengebilde aus mehreren Teilflächenstücken zusammenzusetzen, welche untereinander zur Ausbildung des gesamten textilen Flächengebildes miteinander verbunden sind.

Die Flächengebilde, welche aus einer horizontal verlaufenden Krempenhalbfläche und einer bevorzugt nahtlos daran anschließenden vertikal verlaufenden Stutzenhalbfläche gebildet werden, weisen generell eine "T"-Form auf, wobei die Stutzenhalbfläche den Stamm des T-Buchstabens bildet und die Krempenhalbfläche den horizontal verlaufenden Teil des Buchstabens T bildet. Der Stamm der "T"-förmigen Flächengebilde kann gegenüber dem horizontal verlaufenden Teil geneigt angeordnet werden.

Bei der Definition des horizontalen Verlaufes wird erfindungsgemäß ein Verlauf entlang im Wesentlichen der Rohrlängsachse verstanden. Bei dem vertikalen Verlauf wird ein Verlauf orthogonal oder in einem Winkel zu der Rohrlängsachse verstanden. Der vertikale Verlauf ist dabei bevorzugt dem Verlauf des von der Rohrleitung abgehenden Rohrabzweigs angepasst.

Die erfindungsgemäße Rohreinsatzmanschette zur Reparatur von Rohrabzweigen einer Rohrleitung kann gemäß einem zweiten Aspekt der Erfindung einen Stutzen und eine an ein Ende anschließende Krempe umfassen, bevorzugt weist die Rohreinsatzmanschette gemäß dem zweiten Aspekt die Merkmale der Rohreinsatzmanschette gemäß dem ersten Aspekt der Erfindung auf, wobei die Stutzenlängsachse in einem Bereich von 55 bis 78 Grad relativ zu der Krempe verläuft.

Nachfolgend werden vorteilhafte optionale Merkmale der erfindungsgemäßen Rohreinsatzmanschetten ausgeführt, die nachfolgenden Merkmale können bevorzugt jeweils für die Rohreinsatzmanschette gemäß dem ersten Aspekt oder dem zweiten Aspekt vorgesehen werden.

Die Verbindung der textilen Flächengebilde kann mittels Kleben, Heften, Nähen, Verschweißen oder Verschmelzen erfolgen.

Die textilen Flächengebilde können unbeschichtet oder ganz oder teilweise mit einer Kaschierung vorzugsweise Beschichtung oder Folie vorzugsweise eine einseitige Kaschierung oder Folie aufweisen und/oder die textilen Flächengebilde eine Kaschierung vorzugsweise Beschichtung oder Folie bestehend aus einem organischen Polymer vorzugsweise ausgebildet aus der Gruppe bestehend aus Polypropylen, Polyurethan und Polysiloxan aufweisen.

Erfindungsgemäß wird die Kaschierung auf der Rohrwand abgewandten Seite der textilen Flächengebilde ausgeführt und somit auf der Seite vorgesehen, auf welcher die textilen Flächengebilde aufeinander aufliegen.

Es kann vorgesehen werden, dass die Krempe im aufgefalteten Zustand eine rechteckige Außenform aufweist mit einer Breite in horizontaler Richtung bzw. entlang des Verlaufs der Rohrlängsachse und einer Länge in vertikaler Richtung bzw. in Richtung orthogonal zu der Rohrlängsachse und damit bei Installation der Rohreinsatzmanschette entlang des Innenumfangs der Rohrleitung. Unter einer rechteckigen Außenform wird erfindungsgemäß auch eine Form verstanden, welche an den Ecken des Rechtecks abgerundet ist.

Es können erfindungsgemäß jedoch auch von der Rechteckform abweichende Formen vorgesehen werden, wie insbesondere ellipsen-, kreisförmige oder weitere bekannte geometrische Grundformen.

Erfindungsgemäß kann es vorgesehen sein, dass die Länge der Krempe größer als der Innendurchmesser der zu reparierenden Rohrleitung gewählt ist, so dass bei Einlegen des Stutzens in den zu reparierenden Rohrabzweig die Krempe den Innenumfang der Rohrleitung im Bereich des Rohrabzweigs zur Ausbildung einer Manschette vollständig bedeckt, wobei sich bevorzugt die beiden die Krempe bildenden textilen Flächengebilde in einem Abschnitt des Innenumfangs überlappen. Die Krempe kann somit eine ringförmige Manschette entlang des Innumfangs der Rohrleitung ausbilden, wobei der Stutzen seitlich an den Außenumfang der Manschette zylinderförmig anschließt. Erfindungsgemäß kann jedoch auch eine geringere Länge der Krempe vorgesehen werden, beispielsweise kann die Krempe eine Gesamtlänge von größer des halben Innenumfangs, wie beispielsweise 2/3 des Innenumfangs, der Rohrleitung aufweisen.

Erfindungsgemäß ist somit auch möglich die erfindungsgemäße Rohreinsatzmanschette ohne Überlappung der die Krempe bildenden Textillagen zu verbauen. Bevorzugt kann die Verklebefläche, insbesondere die Länge der Krempe derart gewählt werden, dass die Verjüngung der Manschette in der Sole zugewandten Bereich der Rohrleitung ein Widerlager bildet.

Die Krempe, gebildet aus zwei Krempenhalbflächen, kann eine Länge von mind. 300 mm, bevorzugt eine Länge von 950 mm, aufweisen.

Bevorzugt weist die Krempe eine Breite von mindestens 300 mm auf.

Die textilen Flächengebilde können aus einem Vlies, Filz, Gestrick, Gewirk, Nähgewirk oder Gewebe gebildet werden oder einen Mehrlagenaufbau aus einem oder mehreren der vorgenannten bestehen.

Die textilen Flächengebilde können eine Querdehnung von mindestens 30 % aufweisen, insbesondere im Bereich des Stutzens.

Die Querdehnung der textilen Flächengebilde ist ein wichtiger Faktor für die Anordnung des Stutzens im Winkel von 55 bis 78 Grad. Zudem ermöglicht die Querdehnung einen dehnfähigen Stutzen, so dass die erfindungsgemäße Rohreinsatzmanschette z.B. für Rohrabzweige in die DN 100 und DN 125 Verwendung finden können.

Die textilen Flächengebilde können ein oder mehrere Polymerfasern aufweisen, wobei die eingesetzten Fasern eine Lichtdurchlässigkeit von mindestens 10 % gemäß DIN EN 410 bei Wellenlängen im Bereich von 200 nm bis 600 nm aufweisen.

Die textilen Flächengebilde können weiterhin zumindest anteilig aus einem lichthärtebaren Baustoff, vorzugsweise Harz, insbesondere ausgewählt aus der Gruppe bestehend aus Vinylesterharzen, Acrylatharzen und Epoxidharzen gebildet werden.

Gemäß einem weiteren Aspekt der vorliegenden Erfindung kann ein Verfahren zur Sanierung von Rohrabzweigen einer Rohrleitung vorgesehen werden, welches die folgenden Schritte umfasst:
a. Bereitstellen einer Rohreinsatzmanschette gemäß dem ersten oder zweiten Aspekt der Erfindung;
b. Tränken der textilen Flächengebilde der Rohreinsatzmanschette mit einem aushärtbaren Harz;
c. Einbringen der Rohreinsatzmanschette in eine zu reparierende Rohrleitung mittels Setzgerät oder Packer; und
d. Aushärten des Harzes der Rohreinsatzmanschette.

Gemäß einem fünften Aspekt ist erfindungsgemäß die Verwendung einer Rohreinsatzmanschette aus dem ersten oder zweiten Aspekt zur Sanierung einer Rohrleitung mit einem Rohrabzweig vorgesehen.

Im nachfolgenden werden unter Bezugnahme auf die beigefügten Figuren beispielhafte Ausführungsformen der erfindungsgemäßen Rohreinsatzmanschette sowie deren Installationslage in einer zu sanierenden Rohrleitung und einem Rohrabzweig erläutert.

Es zeigen:
- Figur 1A eine perspektivische Ansicht einer schematischen Darstellung einer ersten beispielhaften Ausführungsform einer Rohreinsatzmanschette im Fertigungszustand;
- Figur 1B eine perspektivische Ansicht einer schematischen Darstellung einer zweiten Ausführungsform einer erfindungsgemäßen Rohreinsatzmanschette im nicht eingebauten Ausgangs- bzw. Fertigungszustand;
- Figur 2 die Durchsicht durch eine erste Rohrleitung mit einem Abzweig, welche mit einer ersten beispielhaften Ausführungsform einer erfindungsgemäßen Rohreinsatzmanschette saniert bzw. repariert wurde;
- Figur 3 die Schnittansicht durch die installierte Rohreinsatzmanschette gemäß Figur 2; sowie die
- Figur 4 die Durchsicht durch eine zweite Rohrleitung mit einem Abzweig, welche mit der ersten beispielhaften Ausführungsform einer erfindungsgemäßen Rohreinsatzmanschette saniert bzw. repariert wurde.

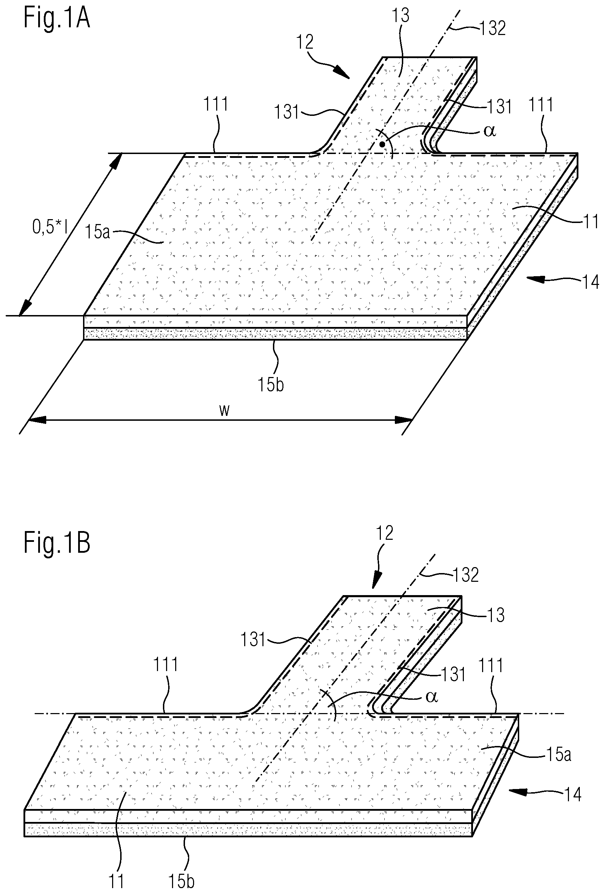

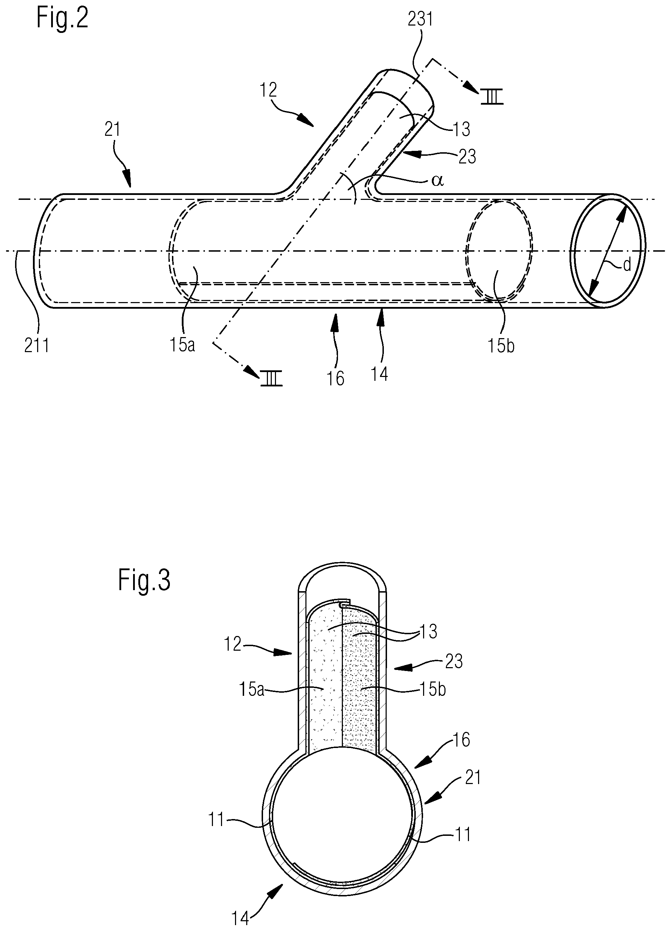

Die erfindungsgemäße Rohreinsatzmanschette wird aus zwei aufeinander aufliegenden textilen Flächengebilden 15a sowie 15b gebildet. Zur besseren Erkennbarkeit der Verläufe der beiden textilen Flächengebilden 15a und 15b wurden diese in den Figuren 1 sowie 3 mit unterschiedlichen Schraffuren versehen.

Die textilen Flächengebilden 15a und 15b werden dabei aus einer horizontal verlaufenden Krempenhalbfläche 11 und einer nahtlos anschließenden, im Wesentlichen vertikal verlaufenden Stutzenhalbfläche 13 gebildet. Wie dies der Figur 1, aber auch der Figur 2 entnehmbar ist weisen somit die textilen Flächengebilde 15a und 15b der Ausführungsformen der Rohreinsatzmanschette im Wesentlichen eine "T"-Form auf. Die beiden aufeinander aufliegenden textilen Flächengebilde 15a und 15b sind im Bereich deren Seitenkanten 131 der Stutzenhalbfläche 13 zur Ausbildung des Stutzens 12 und im Bereich der dem Stutzen 12 zugewandten Kanten 111 der Krempenhalbfläche 11 zur Ausbildung der Krempe miteinander verbunden. Der Stutzen 12, welcher über die beiden Stutzenhalbflächen 13 gebildet wird weist im installierten Zustand eine Zylinderform auf, wie dies den Figuren 2 und 3 entnehmbar ist. Die Verbindung zwischen den beiden textilen Flächengebilden 15a und 15b ist in den Figuren 1A sowie 1B über gestrichelte Linien dargestellt. Bei der Verbindung kann es sich beispielsweise um eine Vernähung der beiden textilen Flächengebilden untereinander handeln. Die Naht bzw. Verbindungsfläche zwischen den beiden textilen Flächengebilden 15a und 15b kann dabei wie in den Figuren 1A und 1B dargestellt, entlang der Seitenkanten 131 der Stutzenhalbfläche 13 sowie der dem Stutzen 12 zugewandten Kanten 111 der Krempenhalbfläche 11 vorgesehen werden. Dabei kann die Verbindungsfläche beispielsweise in einem definierten Abstand und parallel verlaufend zu den jeweiligen Seitenkanten 111, 131 ausgeführt werden oder unmittelbar von dem Bereich der Seitenkanten ausgehend ausgebildet werden. Je nach gewünschter und zu realisierender Haftkraft zwischen den beiden textilen Flächengebilden 15a und 15b kann insbesondere die Breite der realisierten Verbindungsflächen beispielsweise bei einer Verschweißung der textilen Flächengebilden 15a und 15b im Bereich der Seitenkanten miteinander unterschiedlich gewählt werden.

Wie es in den Figuren 1A und 1B dargestellt ist, kann die Krempe 14 eine rechteckige Außenform aufweisen mit einer Breite w in horizontaler Richtung, wobei die horizontale Richtung den Längsverlauf der Rohrleitung 21 beschreibt und mit einer Länge I in vertikaler Richtung, wobei die vertikale Richtung orthogonal zu der Rohrlängsachse bzw. der Horizontallinie verläuft.

Wie dies in der Figur 1A detailiert ist, wird die Krempe 14 durch die beiden Krempenhalbflächen 11 der Rohreinsatzmanschette gebildet, wobei jede der beiden Krempenhalbflächen 11 die Hälfte 0,5^{∗}l der Gesamtlänge I der Krempe 14 in der ausgeführten beispielhaften Ausführungsform aufweist.

Erfindungsgemäß kann es auch vorgesehen werden, beispielsweise die beiden Teile der Krempenhalbflächen 11 mit unterschiedlichen Längenanteilen im Hinblick auf die Gesamtlänge I vorzusehen, derart dass beispielsweise die obere textile Flächenlage 15a lediglich 1/3^{∗}l der Gesamtlänge I der Krempe 14 und die untere textile Flächenlage 15b die weiteren 2/3^{∗}l der Gesamtlänge I zur Ausbildung der Krempe 14 umfasst.

Wie dies den Figuren 1A und 1B entnehmbar ist weisen die erfindungsgemäßen Rohreinsatzmanschetten den Vorteil auf, dass diese im Wesentlichen aus den aufeinander aufliegenden textilen Flächengebilden 15a und 15b gebildet sind. Dadurch wird es ermöglicht die textilen Flächengebilden 15a und 15b aus einer Lage eines textilen Flächengebildes beispielsweise mit einem Cutter oder einer Stanze herauszutrennen, die so erhaltenen textilen Flächengebilde 15a und 15b im Wesentlichen eine "T"-Form aufweisen. Darauffolgend könne mit unterschiedlichen Verfahren die vorbezeichneten Bereiche der textilen Einzellagen untereinander verbunden werden zur Ausbildung des Stutzens 12 und der Krempe 14. Wie dies ebenfalls den Figuren 1A und 1B entnehmbar ist, ist es erfindungsgemäß vorgesehen, die Halbflächen 13 zur Ausbildung des Stutzens 12 der textilen Flächengebilde 15a und 15b ungefähr mittig an der horizontal verlaufenden oberen Kante der Krempenhalbfläche 11 der textilen Flächengebilde 15a und 15b anschließen zu lassen. Erfindungsgemäß kann es auch vorgesehen werden die Halbflächen 13 zur Ausbildung des Stutzens 12 auch außermittig an der horizontal verlaufenden oberen Kante der Krempenhalbfläche 11 der textilen Flächengebilde 15a und 15b anschließen zu lassen.

Die Ausführungsformen der erfindungsgemäßen Rohreinsatzmanschetten gemäß Figuren 1A und 1B unterscheiden sich zunächst in der Wahl der Dimensionierung der Krempenhalbflächen 11 in Relation zu den Stutzenhalbflächen 13.

Ein weiterer entscheidender Unterschied zwischen den beiden dargestellten Ausführungsformen ist das in der Figur 1A der Winkel α zwischen der Verlaufsachse 132 der Stutzenhalbflächen 13 in einem rechten Winkel α zu dem Verlauf der dem Stutzen zugewandten Kanten 111 und damit zu der ausgebildeten Krempe 14 im installierten Zustand verläuft.

In der Figur 1B ist eine alternative Ausführungsform dargestellt in welcher die Verlaufsachse 132 der Stutzenhalbflächen 13 in einen Winkel α<90° relativ zu den dem Stutzen 12 zugewandten Seitenkanten 111 der Krempenhalbflächen 11 ausgebildet ist.

Die Figur 2 zeigt eine erste Rohrleitung 21 mit einem Rohrabzweig 23. Der Verbindungsbereich zwischen der Rohrleitung 21 und dem Rohrabzweig 23 wurde zur besseren Kenntlichkeit der Merkmale der erfindungsgemäßen Rohreinsatzmanschette durchgehend und lediglich schematisch dargestellt. Die Rohrleitung 21 weist zunächst einen Innendurchmesser d auf. In der Figur 2 ist eine beispielhafte Ausführungsform einer erfindungsgemäßen Rohreinsatzmanschette dargestellt, die Rohreinsatzmanschette ist wiederum aus zwei textilen Einzellagen 15a und 15b gebildet. Wie der Figur 2 entnehmbar ist, wurde der Stutzen 12 in den Rohrabzweig 23 platziert. Die an den Stutzen 12 anschließende Krempe 14 wurde entlang des inneren Umfangs der Rohrleitung 21 ausgelegt. Dabei kommen die beiden textilen Einzellagen 15a und 15) zum einander überlappenden Aufliegen.

In Figur 3 ist ein Schnitt entlang der Achse 231 gemäß Figur 2 dargestellt. Deutlich erkennbar ist, dass die beiden textilen Einzellagen 15a und 15b anteilig den Stutzen 12 durch die beiden Stutzenhalbflächen 13 ausbilden. Dabei geht der Stutzen 12 nahtlos in die Krempe 14 über, welche selbst wiederum durch die beiden Krempenhalbflächen 11 der textilen Einzellagen 15a und 15b gebildet wird. Auch hier wurden die Krempenhalbflächen 11 entlang des Umfangs der zu sanierenden Rohrleitung 21 ausgelegt, derart dass nach dem Einlegen des Stutzens 12 in den zu reparierenden Rohrabzweig 23 die Krempe 14 den Innenumfang der Rohrleitung 21 im Bereich zumindest des Rohrabzweigs 23 zur Ausbildung einer Manschette 16 vollständig bedeckt. Wie in Figur 3 dargestellt, können sich dabei die die Krempe 14 ausgebildenden textilen Flächengebilde 15a und 15b in einem Abschnitt des Innenumfangs der Rohrleitung (21) überlappen. Der Figur 3 ist weiterhin entnehmbar, dass die beiden textilen Einzellagen 15a und 15b im Bereich der Seitenkanten der Stutzenhalbflächen 13 miteinander verbunden wurde, wobei der Verbindungsbereich sich aufgrund der Installation in dem Rohrabzweig 23 umgebogen und an den inneren Oberflächenverlauf des Rohrabzweiges 23 angepasst bzw. daran angelegt hat.

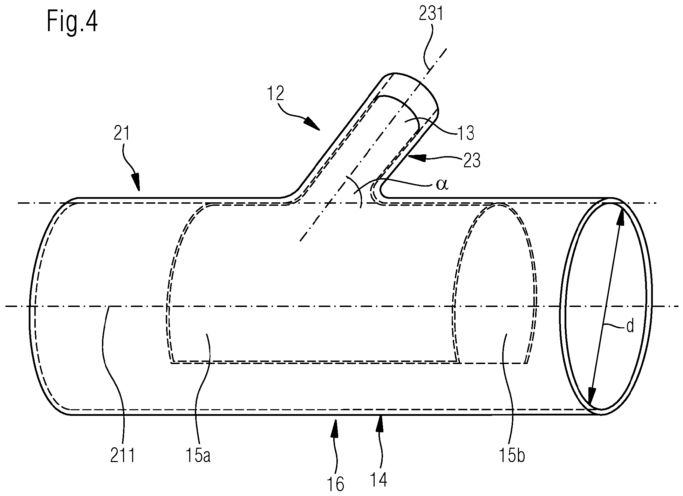

Die Figur 4 zeigt eine zweite Rohrleitung 21 mit einem Rohrabzweig 23. Im Vergleich zu Figur 2 weist die Rohrleitung 21 einen deutlich größeren Durchmesser d, als die Rohrleitung 21 in der Figur 2 auf. In der Figur 4 ist die gleiche erste beispielhafte Ausführungsform der erfindungsgemäßen Rohreinsatzmanschette im installierten Zustand dargestellt. Durch den im Vergleich zu Figur 2 vergrößerten Innendurchmesser d der Rohrleitung 21 überlappen sich bei der Installation die beiden die Krempe 14 bildenden Krempenhalbflächen 11 nicht. Die an den Stutzen 12 anschließende Krempe 14 wurde entlang des inneren Umfangs der Rohrleitung 21 ausgelegt und bildet im ausgehärteten Zustand aufgrund des Formschlusses mit der Innenkontur der Rohrleitung 21 ein Widerlager, welches die Rohreinsatzmanschette zusätzlich zu der Verklebung an der Innenwand gegen das Herausrutschen aus dem Rohrabzweig 23 sichert.

## Patentansprüche

1. Rohreinsatzmanschette zur Reparatur von Rohrabzweigen (23) einer Rohrleitung (21) umfassend einen Stutzen (12) und eine an ein Ende des Stutzens (12) anschließende Krempe (14) gebildet aus zwei aufeinander aufliegenden textilen Flächengebilden (15a, 15b),
wobei die Flächengebilde (15a, 15b) aus einer horizontal verlaufenden Krempenhalbfläche (11) und einer daran anschließenden vertikal verlaufenden Stutzenhalbfläche (13) gebildet ist;
wobei die Flächengebilde (15a, 15b) im Bereich der Seitenkanten (131) der Stutzenhalbfläche (13) zur Ausbildung des Stutzens (12) und im Bereich der dem Stutzen (12) zugewandten Kanten (111) der Krempenhalbfläche (11) zur Ausbildung der Krempe (14) miteinander verbunden sind.

2. Rohreinsatzmanschette zur Reparatur von Rohrabzweigen (23) einer Rohrleitung (21) umfassend einen Stutzen (12) und eine an ein Ende des Stutzens (12) anschließende Krempe (14), bevorzugt mit den Merkmalen gemäß Anspruch 1, wobei die Stutzenlängsachse (132) in einem Winkel im Bereich von 55 bis 78° relativ zu der Krempe (14) verläuft.

3. Rohreinsatzmanschette nach Anspruch 1 oder 2, die Verbindung der textilen Flächengebilde (15a, 15b) mittels kleben, heften, nähen, verschmelzen oder verschweißen erfolgt.

4. Rohreinsatzmanschette nach einem der Ansprüche 1 bis 3, wobei die textilen Flächengebilde (15a, 15b) unbeschichtet oder ganz oder teilweise eine Kaschierung, vorzugsweise Beschichtung oder Folie, vorzugsweise eine einseitige Kaschierung oder Folie, aufweisen und/oder die textilen Flächengebilde eine Kaschierung, vorzugsweise Beschichtung oder Folie, bestehend aus einem organischen Polymer, vorzugsweise ausgewählt aus der Gruppe bestehend aus Polypropylen, Polyurethan und Polysiloxan, aufweisen.

5. Rohreinsatzmanschette nach einem der vorausgehenden Ansprüche, wobei die Krempe (14) eine rechteckige Außenform aufweist mit einer Breite (w) in horizontaler Richtung (211) und einer Länge (I) in vertikaler Richtung.

6. Rohreinsatzmanschette nach Anspruch 5, wobei die Länge (I) der Krempe (14) größer als die Hälfte des Innendurchmessers (d) der zu reparierenden Rohrleitung (21) gewählt ist.

7. Rohreinsatzmanschette nach Anspruch 5, wobei die Länge (I) der Krempe (14) größer als der Innendurchmesser (d) der zu reparierenden Rohrleitung (21) gewählt ist, so dass bei Einlegen des Stutzens (12) in den zu reparierenden Rohrabzweig (23) die Krempe (14) den Innenumfang der Rohrleitung (21) im Bereich des Rohrabzweigs (23) zur Ausbildung einer Manschette (16) vollständig bedeckt, wobei sich bevorzugt die beiden die Krempe (14) bildenden textilen Flächengebilde (15a, 15b) in einem Abschnitt des Innenumfangs überlappen.

8. Rohreinsatzmanschette nach einem der vorausgehenden Ansprüche, wobei die Krempe (14) eine Länge (I) von insgesamt mind. 300, vorzugsweise 950 mm hat.

9. Rohreinsatzmanschette nach einem der vorausgehenden Ansprüche, wobei die Krempe (14) eine Breite (w) von mindestens 300 mm hat.

10. Rohreinsatzmanschette nach einem der vorausgehenden Ansprüche, wobei die textilen Flächengebilde (15a, 15b) ein Vlies, Filz, Gestrick, Gewirk, Nähgewirk oder Gewebe sind oder ein Mehrlagenaufbau aus einem oder mehreren der Vorgenannten besteht.

11. Rohreinsatzmanschette nach einem der vorausgehenden Ansprüche, wobei das textile Flächengebilde (15a, 15b) eine Querdehnung von mind. 30% aufweist, insbesondere im Bereich des Stutzens (12).

12. Rohreinsatzmanschette nach einem der vorausgehenden Ansprüche, wobei die textilen Flächengebilde (15a, 15b) ein oder mehrere organische Polymerfaser(n) aufweist und wobei die eingesetzten Fasern eine Lichtdurchlässigkeit von mindestens 10 % gemäß DIN EN 410 bei Wellenlängen im Bereich von 250 nm bis 600 nm aufweist.

13. Rohreinsatzmanschette nach Anspruch 12, wobei die textilen Flächengebilde (15a, 15b) zumindest anteilig einen lichthärtbaren Baustoff, vorzugsweise Harz, insbesondere ausgewählt aus der Gruppe bestehend aus Vinylesterharze, Acrylatharze und Epoxidharzes umfassen.

14. Verfahren zur Sanierung von Rohrabzweigen (23) einer Rohrleitung (21) umfassend der Schritte:
a. Bereitstellen einer Rohreinsatzmanschette nach einem der Ansprüche 1 bis 13;
b. Tränken der textilen Flächengebilde (15a, 15b) der Rohreinsatzmanschette mit einem härtbaren Harz;
c. Einbringen der Rohreinsatzmanschette in eine zu reparierende Rohrleitung (21) mittels Setzgerät oder Packer; und
d. Aushärten des Harzes der Rohreinsatzmanschette.

15. Verwendung einer Rohreinsatzmanschette nach einem der Ansprüche 1 bis 13 zur Sanierung einer Rohrleitung (21) mit einem Rohrabzweig (23).
